## Europäisches Patentamt
## European Patent Office
## Office européen des brevets

(19)

(11) Numéro de publication: **0 171 325**
**B1**

(12)

# FASCICULE DE BREVET EUROPEEN

(45) Date de publication du fascicule du brevet:
**24.08.88**

(21) Numéro de dépôt: **85401505.4**

(22) Date de dépôt: **22.07.85**

(51) Int. Cl.⁴: **B 29 C 67/14,** B 29 C 33/48, B 29 D 31/00

(54) **Dispositif de fabrication par bobinage filamentaire d'une enveloppe creuse et enveloppe obtenue à l'aide du dispositif.**

(30) Priorité: **23.07.84 FR 8411641**

(43) Date de publication de la demande:
**12.02.86 Bulletin 86/7**

(45) Mention de la délivrance du brevet:
**24.08.88 Bulletin 88/34**

(84) Etats contractants désignés:
**BE CH DE GB IT LI NL**

(56) Documents cités:
**FR - A - 2 321 997**
**US - A - 4 126 659**
**US - A - 4 169 749**

(73) Titulaire: **AEROSPATIALE SOCIETE NATIONALE INDUSTRIELLE, 37, Boulevard de Montmorency, F-75781 Paris Cédex 16 (FR)**

(72) Inventeur: **Lamalle, Jean, Résidence Muratel, F-33290 Blanquefort (FR)**
Inventeur: **Tisné, Jean-Louis, 4 Allée de Saint Julien, F-33127 Martignas Sur Jalle (FR)**

(74) Mandataire: **Lepeudry-Gautherat, Thérèse et al, ARMENGAUD JEUNE CABINET LEPEUDRY 6, rue du Fg. St-Honoré, F-75008 Paris (FR)**

ACTORUM AG

## Description

La présente invention concerne un dispositif pour réaliser, par bobinage filamentaire, une enveloppe creuse dont le profil est évolutif le long de son axe longitudinal comme c'est par exemple le cas d'une aile d'avion, de planeur ou d'une pale d'hélicoptère. Elle concerne également le produit obtenu par la mise en œuvre de ce dispositif notamment une voilure d'aéronef comportant un état de sa surface extérieure voisin du «glacé».

Il est connu de réaliser de telles enveloppes creuses en matériau composite à base de fibres imprégnées de résine polymérisable. Ces enveloppes, constituant notamment la peau d'ailes de planeurs sont réalisés selon une première technique, à partir de tissus de verre ou autre, imprégnés de résine et drapés, après découpe dans des moules creux, permettant d'obtenir après polymérisation, le plus souvent sous vide, des demi-enveloppes. Celles-ci sont ensuite assemblées par collage après avoir mis en place les éléments d'armature de la structure entre les deux demi-coquilles et les y avoir fixés par exemple par collage. Les principaux inconvénients de cette technique résident dans la nécessité d'une main d'œuvre importante et très qualifiée car de nombreuses opérations sont réalisées manuellement. Malgré la haute qualification des opérateurs, on constate qu'il persiste des défauts dont il faut tenir compte à la conception de la pièce en prévoyant des marges de sécurité importantes. Enfin, il est nécessaire de reprendre la pièce terminée pour effectuer les opérations de finition à la main (ébavurage du plan de joint et polissage), ces opérations conduisant à un coût de fabrication extrêmement élevé dont la composante principale est le prix de la main d'œuvre mais qui comporte également un facteur non négligeable dans les chutes de matière première utilisée et les rebuts.

On a déjà proposé une seconde méthode pour réaliser ce type de produit qui consiste essentiellement à réaliser un bobinage filamentaire (avec fils, nappes ou rubans) imprégné de résine sur un mandrin sensiblement cylindrique puis à découper l'ébauche ainsi obtenue le long de deux génératrices du mandrin pour obtenir des feuilles qui sont ensuite disposées dans des moules creux où, plaqués aux parois de ce moule, elles subissent une polymérisation de leur résine. Cette méthode permet d'éviter la main d'œuvre nécessaire au drapage de la technique précédente, et une certaine économie de matière, mais ne supprime pas les opérations d'assemblage des deux demi-coquilles obtenues ni les opérations de finition.

On a également pensé à procéder par enroulement filamentaire sur un mandrin creux déformable. Le mandrin est en fait une enveloppe gonflable sur laquelle le bobinage est réalisé à l'état gonflé puis on dégonfle cette enveloppe toujours équipée du bobinage non polymérisé pour l'introduire dans un moule creux dont l'empreinte correspond à la forme à obtenir. On regonfle alors le mandrin pour plaquer la peau bobinée contre les parois du moule. Le bobinage est alors polymérisé en forme. Cette méthode est décrite dans le FR-A-2 321 997 qui a pour objet un dispositif du type énoncé dans le préambule de la revendication 1; une telle méthode permet de mécaniser la production et donc d'en réduire le coût mais présente un inconvénient technique important dans le fait qu'il se produit un glissement des fibres les unes sur les autres entre la position dans laquelle elles sont bobinées sur le mandrin et la position dans laquelle elles sont mises en forme dans le moule et donc immobilisées par la polymérisation de la résine. Alors que la position d'enroulement est connue et maîtrisée, de même que la tension des fils, la position finale de ces derniers ainsi que leur état de contrainte n'est absolument pas maîtrisé ce qui peut nuire à la qualité et aux caractéristiques mécaniques escomptées du produit.

L'invention entend remédier à ces inconvénients en proposant un dispositif par lequel on réduit le coût de fabrication tout en conservant au produit les caractéristiques mécaniques qui lui ont été conférées par la loi de bobinage. Grâce à ce dispositif en effet, on évite tout mouvement non contrôlé des fibres depuis le bobinage jusqu'à la polymérisation. On parvient ainsi à garantir une utilisation optimale des propriétés des fibres qui par exemple sont maintenues en équitension, à obtenir un état de surface de la peau externe de l'enveloppe très satisfaisant et ne nécessitant aucune retouche ou aucun polissage ultérieur, tout en autorisant un processus de fabrication très mécanisé.

A cet effet, l'invention a donc pour objet un dispositif de fabrication par bobinage filamentaire d'une enveloppe creuse de forme allongée dont le profil est évolutif le long de sa direction longitudinale et qui comporte une surface extérieure glacée, constitué par un mandrin déformable à l'intérieur duquel un noyau, mandrin sur lequel on réalise ledit bobinage au moyen d'un dispositif d'amenée d'au moins un fil et par un moule dans lequel on enferme ledit mandrin pourvu du bobinage et par des moyens constitués d'une paroi souple pour plaquer l'enveloppe ainsi réalisée contre les parois intérieures de la cavité du moule.

Selon l'invention, le noyau du mandrin déformable susdit est d'un profil semblable mais inférieur en dimensions au profil de l'enveloppe à constituer, sa surface extérieure est, lorsqu'elle est disposée dans le moule, éloignée de la surface intérieure du moule d'une valeur sensiblement constante légèrement supérieure à l'épaisseur de l'enveloppe à obtenir, tandis que la paroi souple est d'une épaisseur au plus égale à la différence entre l'épaisseur de l'enveloppe et la valeur susdite, et mobile par rapport audit noyau entre une première position dans laquelle elle est plaquée sur la surface extérieure du mandrin et une seconde position dans laquelle elle est éloignée de ladite surface extérieure, et sont prévus des moyens de relâchement de la tension des fils du bobinage réalisé sur ladite paroi dans sa première position.

Dans un mode de réalisation préféré de l'invention, la paroi mobile susdite est constituée par une vessie souple enveloppant de manière étanche au moins la majeure partie dudit noyau, l'espace délimité ainsi entre la surface extérieure du noyau et la vessie étant sélectivement connecté à une source de vide et une source d'amenée d'un fluide sous pression.

En outre, les moyens de relâchement de la tension du bobinage sont constitués par la disposition du fil sur le mandrin le long d'une trajectoire à glissement contrôlé. On rappellera à cet égard qu'une trajectoire à glissement contrôlé est un bobinage, connu en lui-même, dont la loi permet d'enrouler un fil sur un mandrin, au moyen du dispositif d'amenée de ce fil, de manière que la longueur du fil fournie soit supérieure à la longueur du fil strictement nécessaire pour joindre deux points donnés de sa trajectoire sur le mandrin.

Un autre moyen de relâchement qui peut être mis en œuvre dans l'invention est constitué par les fils eux-mêmes qui possèdent, notamment lorsqu'ils sont en carbone, la propriété de se détendre après bobinage et avant la fin de la polymérisation de la résine, propriété qui est généralement considérée dans l'art antérieur comme un défaut et que l'invention exploite de manière avantageuse.

Un troisième moyen de relâchement peut enfin être constitué par une portion longitudinale du noyau, non recouverte par la vessie, susceptible d'être écartée ou rapprochée de l'autre portion du noyau le long de guides perpendiculaires à son axe longitudinal. Cette disposition autorise le relâchement pour, par exemple, un bobinage à trajectoire géodésique, c'est-à-dire un bobinage dont la loi est telle que le dispositif d'amenée du fil, de la nappe ou de la mèche de fibres délivre la longueur de fil strictement égale à la plus courte distance séparant deux points donnés de cette trajectoire sur le mandrin, ou pour des fibres ne possédant pas les propriétés d'allongement susdites.

Bien entendu, ces moyens peuvent être combinés entre eux pour obtenir le meilleur résultat, c'est-à-dire les meilleures possibilités de transfert de l'enveloppe bobinée sur le mandrin contre les parois intérieures du moule compte tenu de la nature des fibres employées, du type d'enroulement réalisé et des caractéristiques géométriques et dimensionnelles du dispositif employé. Les meilleures possibilités de transfert doivent s'entendre comme celles permettant de conserver au mieux les caractéristiques de l'enveloppe telles qu'elles résultent du bobinage mis en œuvre dont on a déterminé la loi en fonction desdites caractéristiques à obtenir.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels:

La figure 1 est un schéma d'un mandrin appartenant au dispositif de l'invention;

La figure 2 illustre schématiquement un enroulement filamentaire réalisé sur un mandrin du type de celui de la figure 1;

La figure 2A est un schéma d'un mandrin présentant une surface concave sur lequel on a réalisé un enroulement filamentaire;

La figure 3 est une vue schématique du moule coopérant, dans le dispositif de l'invention avec le mandrin susdit;

Les figures 4 et 5 montrent la mise en place du mandrin dans le moule (figure 4) et le transfert de l'enveloppe du mandrin au moule;

Les figures 6 et 7 illustrent une variante de réalisation du mandrin;

Les figures 8 et 9 illustrent la fonction de la variante de réalisation des figures 6 et 7;

La figure 10 est le schéma d'une variante des figures 6 et 7;

La figure 11 montre une enveloppe obtenue par le dispositif de l'invention;

La figure 12 illustre la constitution de la paroi d'une voilure à partir de l'enveloppe de la figure 11;

La figure 13 est un schéma de l'armature de renforcement de la paroi de la figure 12;

La figure 14 illustre la voilure complète pourvue de son armature.

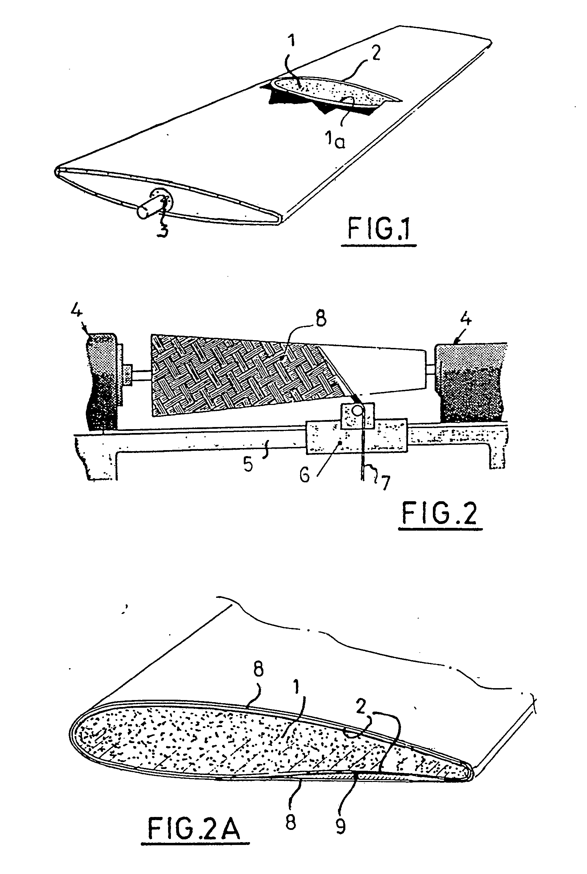

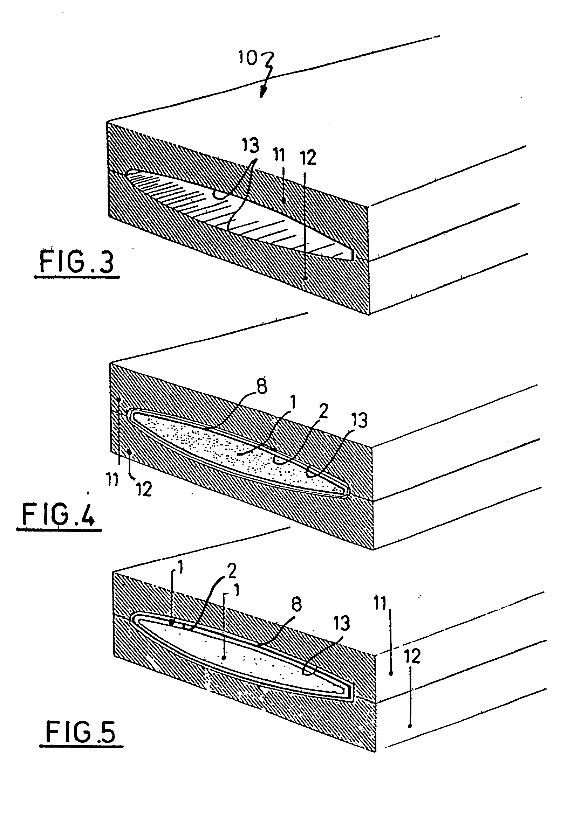

En se reportant tout d'abord à la figure 1 on voit un mandrin conforme à l'invention constitué par un noyau rigide 1 en toute matière appropriée (métallique ou en matériau synthétique) dont la surface extérieure 1a est d'un profil semblable mais inférieur en dimensions au profil de l'enveloppe à constituer. Cette surface extérieure 1a est recouverte d'une paroi 2 mobile par rapport au noyau 1 entre une première position dans laquelle elle est plaquée sur la surface 1a et une seconde position dans laquelle elle est éloignée de cette surface. Cette paroi est en fait constituée par une vessie souple, enveloppant totalement la surface 1a et fixée de manière étanche au noyau 1 par ses extrémités. On a représenté en 3 un embout de raccordement pneumatique du mandrin à une source de fluide sous pression ou une source de vide non représentées. Des canaux internes au noyau 1, non représentés, relient l'embout 3 à l'espace séparant la vessie 2 de la paroi extérieure 1a. Ainsi, lorsque l'embout 3 est relié à la source de vide, la vessie est plaquée intimement contre la surface 1a du noyau, tandis que lorsque l'embout 3 est relié à la source de fluide sous pression, la vessie décolle de la surface 1a et est maintenue éloignée de cette dernière, pour assurer la fonction qui sera décrite en regard des figures 3, 4 et 5.

Sur la figure 2 on voit que le mandrin 1, 2 est monté sur un dispositif de bobinage de fibres de manière connue. Ce dispositif est représenté sous forme schématique et comprend un organe 4 d'entraînement en rotation du mandrin autour de son axe longitudinal sur le bâti 5 duquel un dispositif 6 d'amenée du fil, de la mèche ou de la nappe 7 imprégnée de résine est animé d'un mouvement de translation alternative qui, conjugué avec la rotation du mandrin constitue la loi de bobinage telle qu'elle a été déterminée en fonction des caractéristiques mécaniques à obtenir. Le revêtement 8 du mandrin ainsi réalisé constitue une peau qui dans sa conformation finale et après polymérisation de la résine formera l'enveloppe désirée.

On notera que le bobinage est réalisé sur le mandrin avec son embout 3 relié à la source de vide, la vessie 2 étant alors plaquée sur la surface 1a du noyau rigide. On indiquera également que le bobinage réalisé sur le mandrin peut être du type dit à glissement contrôlé ou du type géodésique. Comme indiqué plus haut, le glissement contrôlé permet le bobinage d'un fil relativement lâche autorisant ainsi un certain gonflement du mandrin se traduisant par une mise en tension des fibres. Le bobinage à trajectoire géodésique implique la mise en place des fibres sous une certaine tension qui ne permet plus de gonflement du mandrin, sauf si les fibres elles-mêmes ont une capacité d'allongement se traduisant par un relâchement de la tension après bobinage due notamment à l'action de la résine avant polymérisation.

La figure 2A illustre un mandrin qui comporte en 9 une zone concave. On remarque à cet endroit que la peau 8 est située le long de la corde de cette zone concave, la vessie 2 étant plaquée contre le noyau 1. La concavité de la peau sera obtenue au moment de la coopération du mandrin avec le moule comme expliqué ci-après.

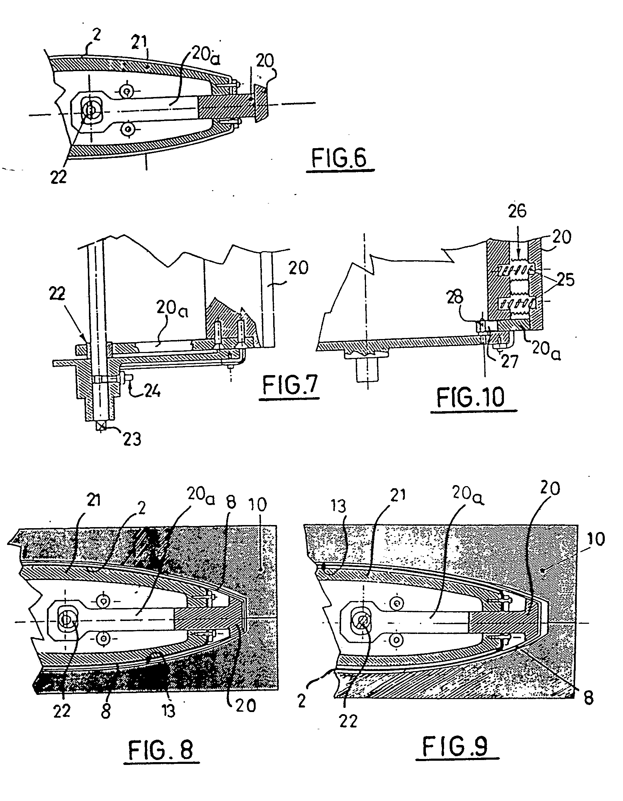

La figure 3 montre schématiquement un moule 10 en deux parties 11 et 12 qui détermine une empreinte dont la paroi 13 a un profil identique à celui de la surface extérieure de l'enveloppe à obtenir. Sur la figure 4 on a représenté le mandrin bobiné dans le moule 10 au moment de sa mise en place. On voit que la peau 8 qu'il porte sur la vessie 2 encore plaquée contre le noyau 1 est légèrement éloignée de la paroi 13 susdite. L'épaisseur de l'espace les séparant sera la plus faible possible. En d'autres termes, et c'est là une caractéristique importante de l'invention, on aura pris soin de déterminer le profil du noyau 1 et celui de la surface 13 de l'empreinte du moule 10 de manière que la surface extérieure de la vessie 2, lorsqu'elle est plaquée sur le noyau 1, soit éloignée de la surface 13, le mandrin étant logé dans le moule, d'une distance légèrement supérieure à l'épaisseur de la peau et ce, en tous leurs points. La valeur de l'excédent de cette distance par rapport à ladite épaisseur dépend de plusieurs facteurs tenant à la nature des fibres, et à la nature du bobinage qui conditionnent la limite dans laquelle la vessie 2 peut être gonflée pour porter la peau 8 au contact de la paroi 13 comme illustré par la figure 5 tout en conservant, ou redonnant aux fibres une tension sensiblement uniforme dans cette configuration.

Plaquée contre la paroi 13 par gonflage de la vessie 2, comme le montre la figure 5, la peau 8 est polymérisée. L'opération de transfert de la peau du mandrin au moule a permis de conférer aux fibres les caractéristiques de tension qu'elles doivent avoir au moment de la polymérisation sans avoir provoqué de déplacements entre elles, leur orientation de bobinage étant alors bien conservée. En outre elle permet d'obtenir un état de surface extérieur très lisse, proche du glacé qui supprime toute opération de retouche et de polissage.

Pour l'obtention d'une enveloppe ayant une portion à surface concave, le moule 13 possédera une partie convexe en regard de la zone concave du mandrin. A la mise en place du mandrin dans le moule, ladite partie convexe vient au contact de la zone de la peau située le long de la corde de la partie concave (voir figure 2A) et la contraint à se rapprocher de la surface concave du mandrin. Le gonflage de la vessie effectuera le transfert du reste de la peau du mandrin vers le moule.

La description donnée ci-dessus en regard des figures 1 à 5 est schématique et part de l'hypothèse que les capacités d'allongement des fibres sont suffisantes pour que le transfert puisse s'opérer. Il se peut cependant que celles-ci ne le permettent pas totalement et les figures 6 à 10 illustrent une disposition du mandrin permettant d'effectuer un transfert avec des fibres qui ne s'allongent pas ou pas suffisamment du fait de leur nature ou de la nature du bobinage. Aussi a-t-on représenté sur les figures 6 et 7 le noyau 1 du mandrin, équipé d'une partie longitudinale 20 susceptible d'être écartée ou rapprochée de la partie principale 21 qui est creuse. Un système d'excentrique 22 est attelé à un élément 20a de commande de la position de la partie 20 et dont la rotation est commandée au moyen d'un carré de manœuvre 23. Cet élément de commande 20a constitue également un guide perpendiculaire à la direction longitudinale du mandrin pour le déplacement de ladite partie mobile 20. Un frein 24 bloque la commande de l'excentrique pour fixer la partie 20 susdite dans une position déterminée. On notera que la vessie 2 ne recouvre pas la partie mobile mais est attelée de manière étanche à l'extrémité longitudinale de la partie 21 située en regard de la partie 20a.

Sur les figures 8 et 9 on voit le mandrin des figures 6 et 7 portant un enroulement filamentaire logé dans un moule 10. La figure 8 correspond à la représentation schématique de la figure 4 c'est-à-dire avant gonflage de la vessie 2. On remarque que la peau 8 a été bobinée sur le mandrin 20, 21 alors que la partie 20 est maintenue dans une position éloignée de la partie 21. La figure 9 correspond à la disposition de la figure 5 dans laquelle la vessie 2 a été gonflée. Dans le même temps, au moyen de l'excentrique 22, on a commandé le rapprochement des parties 20 et 21, la partie 21 étant supposée fixe par rapport au moule 10. On a ainsi compensé l'augmentation de longueur périphérique de la peau par la retraction de la partie 20. Cette disposition, combinée avec la valeur de la pression de gonflage de la vessie permet d'ajuster la tension des fibres dans la peau au moment de la polymérisation.

En ce qui concerne la figure 10, on voit qu'il s'agit de la représentation d'une variante de réalisation du mandrin selon les figures 6 et 7 dans laquelle la partie 20 peut être rétractée automatiquement lors du gonflage de la vessie à l'encontre de l'effet d'organes élastiques (ici des ressorts 25 placés dans des soufflets de protection 26) tendant à rappeler la pièce 20 dans sa position d'extension maximale. Le mouvement de cette pièce est guidé par les parties 20a qui comportent une lumière oblongue 27 coopérant par ses extrémités avec une butée 28 fixe.

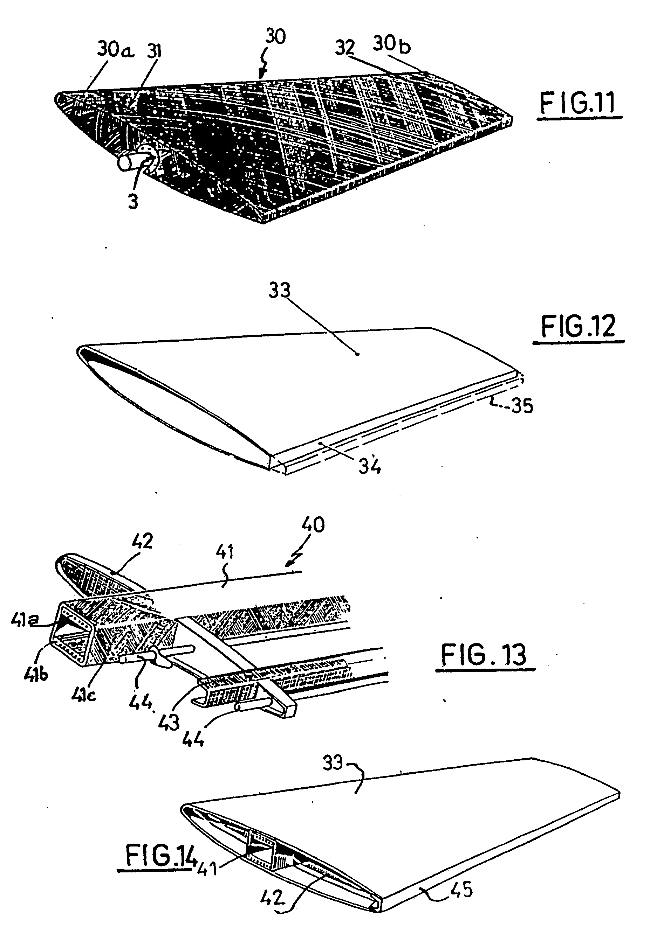

La figure 11 montre l'enveloppe selon l'invention obtenue après démoulage, c'est-à-dire après ouverture du moule. Cette enveloppe 30 est encore sur le mandrin. Pour extraire le mandrin, on procède au tronçonnage des deux extrémités 30a et 30b de l'enveloppe le long de lignes de coupe 31 et 32 après avoir dégonflé la vessie 2.

Dans le cas notamment d'une enveloppe obtenue sur un mandrin conforme à celui représenté aux figures 6 et 7, il peut être avantageux de tronçonner la partie de l'enveloppe qui se situait au delà du bord longitudinal de la partie de mandrin 21 sur lequel est fixée la vessie. La figure 12 montre que l'on obtient ainsi une enveloppe 33 ouverte longitudinalement en 34 par découpage de la partie 35. Cette enveloppe de même que celle obtenue par simple tronçonnage transversal trouvent une application intéressante en tant que paroi externe d'une aile d'aéronef (planeur). En effet, leurs qualités de résistance et d'état de surface sont tout à fait compatibles avec les exigences requises pour une voilure. Elles peuvent alors facilement recevoir une structure de renforcement telle que celle 40 représentée à la figure 13. Cette structure comporte un longeron 41 qui peut être avantageusement constitué par deux semelles 41a, 41b en matériau composite unidirectionnel liées par un bobinage 41c l'ensemble constituant une poutre creuse à flancs droits, de section évolutive. Elle comporte également des nervures 42 qui peuvent être en composite drapé par exemple et un longeronnet 43 issu, soit d'un matériau composite du genre de celui du longeron 41, soit d'une technique de fabrication en drapé. La structure de renforcement comporte également des tringleries de commande 44 des volets et aérofreins de la voilure.

La structure de renforcement préfabriquée est enduite d'un film de colle sur les faces des nervures, longeron et longeronnet qui se trouvent en regard de la surface concave de l'enveloppe, puis introduite dans l'enveloppe par l'une de ses extrémités. On pourra se servir du moule 10, pourvu sur sa face 13 de coussinets souples, comme organe de pressage au moment du collage. Il faut noter que l'enveloppe 33 de la figure 12 permet d'écarter élastiquement les deux bords de son ouverture arrière et ainsi de favoriser l'introduction de la structure de renforcement en préservant le film de colle qu'elle possède. La chute 35 pourra alors servir de longeronnet 45 (figure 14) de fermeture du bord de fuite. La finition de l'aile comportera la mise en place d'éléments préfabriqués tels que les volets, les aérofreins, ...

L'invention trouve une application intéressante dans le domaine de l'aéronautique et plus généralement dans toute industrie (automobile, plaisance, fabrication de pales telles que des pales d'éolienne), de fabrication d'enveloppes creuses qui ne sont pas de révolution autour d'un axe.

**Revendications**

1. Dispositif de fabrication par bobinage filamentaire d'une enveloppe creuse de forme allongée dont le profil est évolutif le long de sa direction longitudinale et qui comporte une surface extérieure glacée, constitué par un mandrin déformable à l'intérieur duquel se trouve un noyau (1), mandrin sur lequel on réalise ledit bobinage (8) au moyen d'un dispositif d'amenée (5, 6) d'au moins un fil et par un moule (10) dans lequel on enferme ledit mandrin (1, 2) pourvu du bobinage (8) et par des moyens constitués d'une paroi souple (2) pour plaquer l'enveloppe (8) ainsi réalisée contre les parois (13) intérieures de la cavité du moule (10), caractérisé en ce que le noyau (1) du mandrin déformable susdit est d'un profil semblable mais inférieur en dimensions au profil de l'enveloppe à constituer, en ce que sa surface extérieure (1a) est, lorsqu'elle est disposée dans le moule (10), éloignée de la surface intérieure (13) du moule d'une valeur sensiblement constante légèrement supérieure à l'épaisseur de l'enveloppe à obtenir, tandis que la paroi souple (2) est d'une épaisseur au plus égale à la différence entre l'épaisseur de l'enveloppe (8) et la valeur susdite, et mobile par rapport audit noyau (1) entre une première position dans laquelle elle est plaquée sur la surface extérieure (1a) du noyau et une seconde position dans laquelle elle est éloignée de ladite surface extérieure, et en ce que sont prévus des moyens (20) de relâchement de la tension des fils du bobinage (8) réalisé sur ladite paroi (2) dans sa première position.

2. Dispositif selon la revendication 1, caractérisé en ce que la paroi mobile susdite est constituée par une vessie souple (2) enveloppant de manière étanche au moins la majeure partie dudit noyau (1), l'espace délimité ainsi entre la surface extérieure (1a) du noyau et la vessie (2) étant sélectivement connecté (3) à une source de vide et une source d'amenée d'un fluide sous pression.

3. Dispositif selon la revendication 1 ou la revendication 2, caractérisé en ce que les moyens susdits de relâchement de la tension du bobinage sont constitués par la disposition du fil sur le mandrin le long d'une trajectoire à glissement contrôlé au moyen du dispositif (5, 6) susdit d'amenée du fil.

4. Dispositif selon la revendication 1 ou la revendication 2, caractérisé en ce que lesdits moyens de relâchement de la tension du bobinage sont constitués par les fils eux-mêmes possédant la propriété de s'allonger après bobinage et avant polymérisation.

5. Dispositif selon la revendication 1 ou la revendication 2, caractérisé en ce que lesdits moyens de relâchement de la tension du bobinage sont constitués par une portion longitudinale (20) du noyau (20, 21) non recouverte par ladite vessie (2), susceptible d'être écartée ou rapprochée de l'autre portion (21) du noyau le long de guides perpendiculaires (20a) à son axe longitudinal.

## Patentansprüche

1. Vorrichtung zur Herstellung eines länglichen Hohlkörpers durch Wickeln von Fasern, dessen Profil sich entlang seiner Längserstreckung ändert und der eine glatte äussere Oberfläche aufweist, mit einem verformbaren Wickelkern, in dem eine Stützeinrichtung (1) angeordnet ist, wobei das Wickeln (8) auf den Wickelkern mittels einer Zuführeinrichtung (5, 6) für mindestens einen Faden erfolgt, und mit einer Form (10), in die man den, den Faserwickel (8) tragenden Wickelkern (1, 2) einschliesst, sowie mit, einen nachgiebigen Mantel (2) aufweisenden Mitteln zum Anlegen des so erhaltenen Hohlkörpers (8) an die Innenwandfläche (13) des Hohlraumes der Form (10), dadurch gekennzeichnet, dass die Stützeinrichtung (1) des verformbaren Wickelkerns ein Profil aufweist, das dem Profil des herzustellenden Hohlkörpers ähnelt, jedoch kleinere Abmessungen aufweist als dieses, indem ihre Aussenoberfläche (1a) im in die Form (10) eingesetzten Zustand einen Abstand von der Innenwandfläche (13) der Form aufweist, der im wesentlichen konstant und etwas grösser als die Wandstärke des herzustellenden Hohlkörpers (8) ist, während der nachgiebige Mantel (2) eine Wandstärke aufweist, die maximal gleich der Differenz zwischen der Wandstärke des Hohlkörpers (8) und dem vorstehend genannten Wert ist und relativ zur Stützeinrichtung (1) bewegbar ist zwischen einer ersten Stellung in Anlage an der Aussenoberfläche (1a) der Stützeinrichtung und einer zweiten Stellung entfernt von dieser Aussenoberfläche (1a) und dadurch, dass Mittel (20) zum Senken der Spannung der Fäden des auf diesem Mantel (2) in dessen erster Stellung hergestellten Faserwickels (8) vorgesehen sind.

2. Vorrichtung nach Anspruch 1, dadurch gekennzeichnet, dass der nachgiebige Mantel aus einer nachgiebigen Hülle (2) besteht, die mindestens den grösseren Teil der Stützeinrichtung (1) dichtend umschliesst, wobei der Raum zwischen der Aussenoberfläche (1a) der Stützeinrichtung (1) und der Hülle (2) wahlweise verbindbar ist mit einer Unterdruckquelle und einer Quelle zur Zufuhr eines Fluids mit Druck.

3. Vorrichtung nach Anspruch 1 oder 2, dadurch gekennzeichnet, dass die Mittel zum Senken der Spannung des Faserwickels in der Anordnung des Fadens auf dem Wickelkern entlang einer Bahn mit kontrollierter Verschiebbarkeit mittels der Fadenzuführeinrichtung (5, 6) besteht.

4. Vorrichtung nach einem der Ansprüche 1 oder 2, dadurch gekennzeichnet, dass die Mittel zum Senken der Spannung des Faserwickels darin bestehen, dass die Fäden in sich die Fähigkeit besitzen, sich nach dem Wickeln und vor der Polymerisation zu längen.

5. Vorrichtung nach Anspruch 1 oder 2, dadurch gekennzeichnet, dass die Mittel zum Senken der Spannung des Faserwickels aus einem länglichen Teil (20) des Wickelkerns (20, 21) bestehen, der nicht von der Hülle (2) bedeckt ist und der dazu eingerichtet ist, entlang zu seiner Längserstreckung lotrechter Führungen (20a) von dem anderen Teil (21) der Stützeinrichtung entfernt zu werden oder an diese angenähert zu werden.

## Claims

1. A device for manufacturing by filament winding a hollow envelope elongate in form, the profile of which is tapered along its longitudinal direction and which comprises an outer glazed surface, said device consisting of a deformable spindle inside which there is a core (1) and on which said winding (8) is effected by means of a device (5, 6) for supplying at least one thread, and of a mould (10) in which said spindle (1, 2) provided with the winding (8) is enclosed and of means consisting of a flexible wall (2) for flattening the envelope (8) thus fabricated against the inner walls (13) of the cavity of the mould (10), characterized in that the core (1) of the abovementioned deformable spindle has a profile similar to but smaller in size than the profile of the envelope to be manufactured, in that its outer surface (1a) is, when it is arranged in the mould (10), distanced from the inner surface (13) of the mould by a substantially constant value slightly greater than the thickness of the envelope to be obtained, while the flexible wall (2) is of a thickness at most equal to the difference between the thickness of the envelope (8) and the abovementioned value and is movable with respect to said core (1) between a first position in which it is flattened against the outer surface (1a) of the core and a second position in which it is remote from said outer surface, and in that means (20) are provided for releasing the tension in the threads of the winding (8) made on said wall (2) in its first position.

2. A device according to claim 1, characterized in that the above-mentioned movable wall consists of a flexible bladder (2) surrounding in a tight manner at least the majority of said core (1), the space thus defined between the outer surface (1a) of the core and the bladder (2) being selectively connected (3) to a vacuum source and a pressurized fluid supply source.

3. A device according to claim 1 or claim 2, characterized in that the above-mentioned winding tension release means consist of the arrangement of the thread on the spindle along a controlled slide trajectory by means of the abovementioned thread supply device (5, 6).

4. A device according to claim 1 or claim 2, characterized in that said winding tension release means consist of the threads themselves having the property of elongating after winding and before polymerisation.

5. A device according to claim 1 or claim 2, characterized in that said winding tension release means consist of a longitudinal portion (20) of the core (20, 21) not covered by said bladder (2) capable of being distanced from or moved nearer to the other portion (21) of the core along guides (20a) perpendicular to its longitudinal axis.

## FIG.1

## FIG.2

## FIG.2A

FIG.3

FIG.4

FIG.5

FIG.6

FIG.7

FIG.10

FIG. 8

FIG.9

FIG.11

FIG.12

FIG.13

FIG.14